# EUROPÄISCHE PATENTANMELDUNG

(11) **EP 0 989 022 A2**
(43) Veröffentlichungstag der Anmeldung: **29.03.2000**
(21) Anmeldenummer: 99118434.2
(22) Anmeldetag: 17.09.1999
(51) Int. Cl.: B60Q 1/00

(54) **Scheinwerfereinheit für Kraftfahrzeuge**

(30) Priorität: 24.09.1998 DE 19843816
(71) Anmelder: Hella KG Hueck & Co., 59552 Lippstadt (DE)
(72) Erfinder: Mertin, Heinrich, 59597 Erwitte (DE)

(57) **Zusammenfassung**

Scheinwerfereinheit für Kraftfahrzeuge, bestehend aus einer Gehäuseaufnahme (2), mindestens einer Abblendlichteinheit (38), einer Signalleuchte (5), eine in Abstrahlrichtung vorgeschalteten Sichtblende (6) und einer die Gehäuseaufnahme abdeckenden Abdeckscheibe (7), wobei die Signalleuchte (5) eine Mehrzahl von Lumineszenzdioden (16) aufweist, die in einem Signalfeld der Sichtblende (6) angeordnet sind.

## Beschreibung

Die Erfindung betrifft eine Scheinwerfereinheit für Kraftfahrzeuge, bestehend aus einer Gehäuseaufnahme, mindestens einer Abblendlichteinheit, einer Signalleuchte, einer in Abstrahlrichtung vorgeschalteten Sichtblende und einer die Gehäuseaufnahme abdeckenden Abdeckscheibe.

Aus der DE 195 07 585 A1 ist eine Scheinwerfereinheit für Fahrzeuge bekannt, bei der in einer Gehäuseaufnahme neben einer Abblendlichteinheit eine Signalleuchte angeordnet ist. Die Gehäuseaufnahme wird in Abstrahlrichtung von einer Abdeckscheibe abgedeckt. Der Abblendlichteinheit und der Signalleuchte ist zur Abdeckscheibe hin ist eine Sichtblende vorgeschaltet.

Nachteilig bei der bekannten Scheinwerfereinheit ist, daß die Scheinwerfereinheit im Bereich der Signalleuchte einen relativ großen Platz- bzw. Raumbedarf aufweist. Bei modernen flachen Fahrzeugkarosserien bzw. flachen Scheinwerfereinheiten könnte dieser Raum jedoch besser, beispielsweise zur Anordnung eines Motors zur Blendenverschiebung der benachbarten Abblendlichteinheit, eingesetzt werden. Dies ist insbesondere dann der Fall, wenn die Abblendlichteinheit als ein Abblendlicht-Projektionsmodul ausgebildet ist, das zur Umschaltung auf Fernlicht eine motorgetriebene verstellbare Blende aufweist.

Aufgabe der vorliegenden Erfindung ist es daher, die bekannte Scheinwerfereinheit so zu verbessern, daß die Signalleuchte mit einem geringeren Volumen auskommt und der freiwerdende Raum für andere Zwecke nutzbar ist.

Diese Aufgabe wird erfindungsgemäß in Verbindung mit dem Oberbegriff des Anspruches 1 dadurch gelöst, daß die Signalleuchte eine Mehrzahl von Lumineszenzdioden aufweist, die in einem Signalfeld der Sichtblende angeordnet sind.

Dadurch, daß die Signal- bzw. Blinkleuchte anstelle einer herkömmlichen Glühlampe eine Mehrzahl von Lumineszenzdioden (LED) bzw. Leuchtdioden aufweist, die direkt an der Sichtblende angeordnet sind, kann die Signalleuchte in einer äußerst flachen raumsparenden Weise ausgebildet werden. Dadurch wird Raum gewonnen, der für andere Zwecke genutzt werden kann.

Gemäß einer bevorzugten Ausführungsform der Erfindung sind die Lumineszenzdioden auf eine der Abdeckscheibe abgewandte Rückseite der Sichtblende aufgesetzt. Die Sichtblende weist im Bereich des Signalfeldes hierzu eine Mehrzahl von Bohrungen auf, in die die Lumineszenzdioden mit ihren Abstrahlköpfen einsetzbar sind.

Dadurch, daß die Lumineszenzdioden direkt auf die Rückseite der Sichtblende aufgesetzt werden, kann auf eine gesonderte Trägerplatine verzichtet werden, wodurch einerseits zusätzlicher Raum gewonnen und andererseits die Montage erleichtert wird.

Nach einer weiteren bevorzugten Ausführungsform der Erfindung weist das Signalfeld eine Mehrzahl von räumlich angeordneten Stufen zur Aufnahme der Lumineszenzdioden auf, die jeweils quer zur Abstrahlrichtung angeordnet sind.

Durch die Ausbildung bzw. Unterteilung des Signalfeldes in eine Mehrzahl von Stufen ergeben sich plane Anlagenflächen für die Lumineszensdioden. Dadurch wird auch sichergestellt, daß die vorgesehene Abstrahlrichtung der Lumineszenzdioden eingehalten wird.

Gemäß einer weiteren bevorzugten Ausführungsform der Erfindung sind die Lumineszenzdioden bzw. das Signalfeld zur Abdeckscheibe hin von einer Abdeckung abgedeckt. Die Abdeckung ist als eine Streuscheibe ausgebildet.

Dadurch wird zum einen ein Sichtschutz und zum anderen eine gleichmäßige Ausleuchtung erzielt.

Nach einer weiteren bevorzugten Ausführungsform der Erfindung ist die Abdeckung in eine dem Signalfeld vorgelagerten Nut der Sichtblende einsetzbar.

Dadurch wird eine einfache und platzsparende Montage der Abdeckung ermöglicht.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

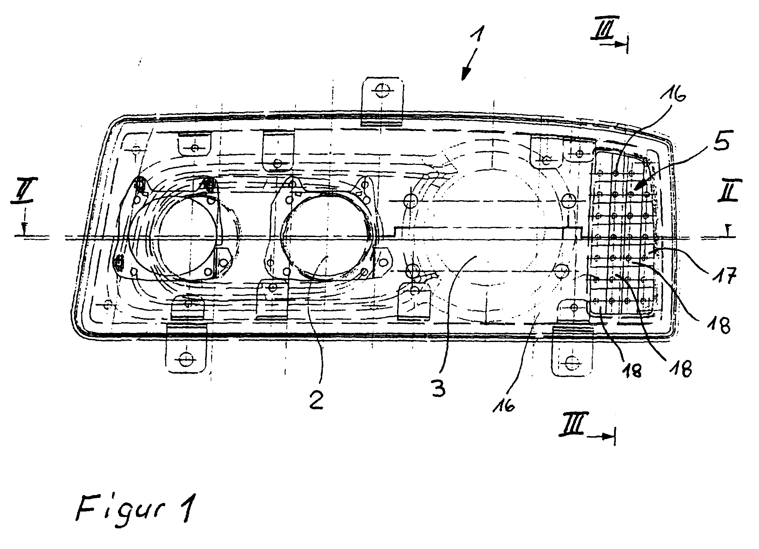

- Figur 1:: Eine Vorderansicht einer Scheinwerfereinheit,

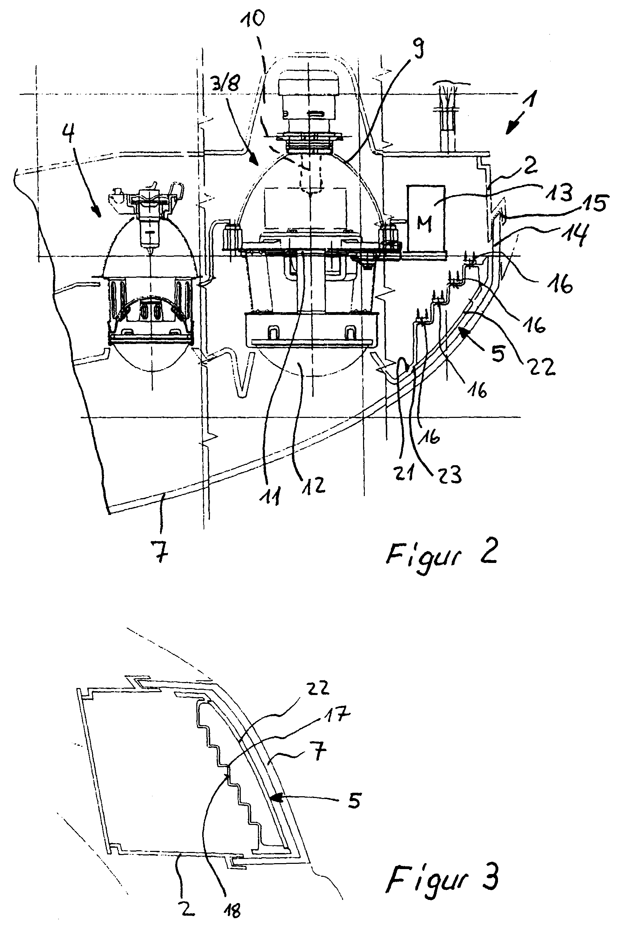

- Figur 2:: eine Draufsicht der Scheinwerfereinheit von Figur 1 entlang der Linie II - II geschnitten im Ausriß,
- Figur 3:: eine Seitenansicht der Scheinwerfereinheit von Figur 1 entlang der Linie III - III geschnitten und

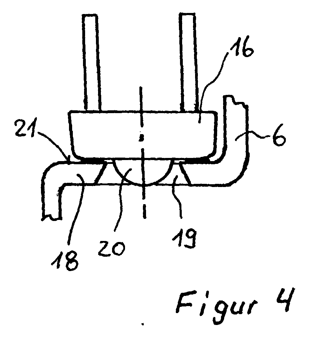

- Figur 4:: eine Seitenansicht einer auf eine Stufe eines Signalfeldes aufgesetzten Lumineszenzdiode in vergrößerter Darstellung.

Eine Scheinwerfereinheit 1 für Kraftfahrzeuge besteht im wesentlichen aus einer Gehäuseaufnahme 2, einer ersten Lichteinheit 3, einer zweiten Lichteinheit 4, einer Signalleuchte 5, einer Sichtblende 6 und einer transparenten Abdeckscheibe 7.

Die erste Lichteinheit 3 ist als Abblendlicht-Projektionsmodul 8 ausgebildet. Das Abblendlicht Projektionsmodul 8 weist einen an der Gehäuseaufnahme 2 befestigten Reflektor 9 auf In dem Reflektor 9 ist eine Lampe 10 angeordnet, die beispielsweise als Xenon-Lampe ausgebildet ist. Der Lampe 10 ist in Abstrahlrichtung eine Blende 11 und eine Projektionslinse 12 vorgelagert. Über einen Motor 13 ist die Blende so verstellbar, daß das Abblendlicht als Fernlicht eingestellt werden kann. Es ist aber grundsätzlich auch möglich, das Abblendlicht durch Verstellen bzw. Verschieben der Projektionslinse 12 als Fernlicht einzustellen.

Die zweite Lichteinheit 4 kann beispielsweise als ein Nebellicht-Projektionsmodul ausgebildet sein.

Die Signalleuchte 5 ist zur Außenseite des nicht dargestellten Kraftfahrzeuges hin angeordnet. Die Signalleuchte 5 wird als Fahrtrichtungsanzeiger, also als Blinklicht verwendet.

Die Lichteinheiten 3, 4 sind an der Gehäuseaufnahme 2 angeordnet. Die Gehäuseaufnahme 2 wird in Abstrahlrichtung von der Abdeckscheibe 7 abgedeckt, die mit einem Rand 14 in einer umlaufenden Nut 15 der Gehäuseaufnahme 2 geführt wird.

Zwischen den Lichteinheiten 3,4 und der Abdeckscheibe 7 ist die Sichtblende 6 angeordnet.

Dem Abblendlicht-Projektionsmodul 8 benachbart weist die Sichtblende 6 in einem zur Fahrzeugaußenseite hin angeordneten Bereich die Signalleuchte 5 auf Die Signalleuchte besteht aus einer Mehrzahl, beispielsweise siebenundzwanzig Leucht- bzw. Lumineszenzdioden (LED) 16, die in einem Signalfeld 17 angeordnet sind. Das Signalfeld besteht aus siebenundzwanzig räumlich angeordneten Stufen 18, die jeweils quer zur Abstrahlrichtung angeordnet sind.

Die Stufen 18 weisen jeweils eine Bohrung 19 auf, in die die Lumineszenzdioden 16 mit ihren Abstrahlköpfen 20 hineinragen. Hierzu werden die Lumineszenzdioden 16 mit ihrer quer zur Abstrahlrichtung angeordneten Stirnfläche von einer der Abdeckscheibe 7 abgewandten Rückseite 21 der Sichtblende 6 auf die Stufen 18 aufgesetzt und mit der Sichtblende 6 bzw. den Stufen 18 verklebt. Anschließend werden die Lumineszenzdioden 16 verdrahtet bzw. zu einer Gruppe zusammengeschaltet.

Zur Abdeckscheibe 7 hin werden die Lumineszenzdioden 16 bzw. das Signalfeld 17 von einer Abdeckung 22 abgedeckt. Die Abdeckung 22 ist als Streuscheibe ausgebildet und bewirkt eine gleichmäßige Lichtverteilung der Signalleuchte 5. Die Abdeckung 22 wird in eine dem Signalfeld 17 vorgelagerte Nut 23 der Sichtblende 6 eingesetzt. Die Abdeckung 22 wird mit der Nut 23 verklebt. Es ist aber auch möglich, die Abdeckung 22 einrastend auszubilden.

## Patentansprüche

1. Scheinwerfereinheit für Kraftfahrzeuge, bestehend aus einer Gehäuseaufnahme, mindestens einer Abblendlichteinheit, einer Signalleuchte, einer in Abstrahlrichtung vorgeschalteten Sichtblende und einer die Gehäuseaufnahme abdeckenden Abdeckscheibe, dadurch gekennzeichnet, daß die Signalleuchte (5) eine Mehrzahl von Lumineszenzdioden (16) aufweist, die in einem Signalfeld (17) der Sichtblende (6) angeordnet sind.

2. Scheinwerfereinheit nach Anspruch 1, dadurch gekennzeichnet, daß die Lumineszenzdioden (16) auf eine der Abdeckscheibe (7) abgewandte Rückseite (21) der Sichtblende (6) aufgesetzt sind.

3. Scheinwerfereinheit nach Anspruch 1 oder 2, dadurch gekennzeichnet, daß die Sichtblende (6) im Bereich des Signalfeldes (17) eine Mehrzahl von Bohrungen (19) aufweist, in die die Lumineszenzdioden (16) mit ihren Abstrahlköpfen (20) einsetzbar sind.

4. Scheinwerfereinheit nach einem der Ansprüche 1 bis 3, dadurch gekennzeichnet, daß das Signalfeld (17) eine Mehrzahl von räumlich angeordneten Stufen (18) zur Aufnahme der Lumineszenzdioden (16) aufweist, die jeweils quer zur Abstrahlrichtung angeordnet sind.

5. Scheinwerfereinheit nach einem der Ansprüche 1 bis 4, dadurch gekennzeichnet, daß die in dem Signalfeld (17) angeordneten Lumineszenzdioden (16) zu einer Gruppe geschaltet sind.

6. Scheinwerfereinheit nach einem der Ansprüche 1 bis 5, dadurch gekennzeichnet, daß die Lumineszenzdioden (16) mit der Sichtblende (6) verklebt sind.

7. Scheinwerfereinheit nach einem der Ansprüche 1 bis 6, dadurch gekennzeichnet, daß die Lumineszenzdioden (16) zur Abdeckscheibe (7) hin von einer Abdeckung (22) abgedeckt sind.

8. Scheinwerfereinheit nach Anspruch 7, dadurch gekennzeichnet, daß die Abdeckung (22) als getönte, transparente Abdeckung ausgebildet ist.

9. Scheinwerfereinheit nach Anspruch 7 oder 8, dadurch gekennzeichnet, daß die Abdeckung (22) als Streuscheibe ausgebildet ist.

10. Scheinwerfereinheit nach einem der Ansprüche 7 bis 9, dadurch gekennzeichnet, daß die Abdeckung (22) in eine dem Signalfeld (17) vorgelagerte Nut (23) der Sichtblende (6) einsetzbar ist.

11. Scheinwerfereinheit nach einem der vorstehenden Ansprüche, dadurch gekennzeichnet, daß die die Lumineszensdioden (16) tragende Abdeckung (22) und die Rückwand der Gehäuseaufnahme (2) in der Bautiefe des Scheinwerfers einen Raum zur Aufnahme von Bauteilen begrenzen, wobei der Raum eine größere Bautiefe als die Signalleuchte zwischen Abdeckscheibe (7) und Abdeckung (22) aufweist.
